(19) **Europäisches Patentamt**

**European Patent Office**

**Office européen des brevets**

(11) **EP 1 355 207 A1**

(12) **EUROPÄISCHE PATENTANMELDUNG**

(43) Veröffentlichungstag:
**22.10.2003 Patentblatt 2003/43**

(51) Int Cl.7: **G05B 11/32**, F25B 49/02, F25B 41/06

(21) Anmeldenummer: **02008566.8**

(22) Anmeldetag: **16.04.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Otto Egelhof GmbH & Co.**
**70736 Fellbach (DE)**

(72) Erfinder: **Litz, Lothar, Prof. Dr.-Ing. habil.**
**67661 Kaiserslautern (DE)**

(74) Vertreter: **Manitz, Finsterwald & Partner GbR**
**Postfach 31 02 20**
**80102 München (DE)**

(54) **Verfahren zum Betreiben einer Kompressionskälteanlage und Kompressionskälteanlage**

(57) Verfahren zum Betreiben einer Kompressionskälteanlage, insbesondere zum Kühlen von Räumen (1), mit einem Kälterkreislauf (4) umfassend einen Verdampfer (5), einen Kompressor (6), einen Kondensator (7) und ein Expansionsventil (8), bei welchem die Kälteleistung $\dot{Q}_0$ und der Arbeitspunkt $T_0$ des Verdampfers (5) durch Vergleich des Sollwertes und des Istwertes geeigneter Regelgrößen über den Öffnungsgrad $U_{EEV}$ des Expansionsventils (8) und die Leistung, insbesondere die Drehzahl $U_C$ des Kompressors (6) als Stellgrößen geregelt werden, wobei zur Verbesserung der Regelung bei der Bestimmung der Stellwerte aus der jeweiligen Abweichung der Regelgrößen von ihrem Sollwert die Kopplung der Regelgrößen durch Entkopplungsglieder (16) mit zuvor bestimmten Entkopplungsfunktionen zumindest näherungsweise kompensiert wird, sowie entsprechend ausgebildete Kompressionskälteanlage.

Fig. 2

EP 1 355 207 A1

**Beschreibung**

Die vorliegende Erfindung betrifft ein Verfahren zum Betreiben einer Kompressionskälteanlage, insbesondere zum Kühlen von Räumen, mit einem Kältekreislauf umfassend einen Verdampfer, einen Kompressor, einen Kondensator und ein Expansionsventil, bei welchem die Kälteleistung $Q_0$ und der Arbeitspunkt $T_0$ des Verdampfers durch Vergleich des Sollwertes und des Istwertes geeigneter Regelgrößen über den Öffnungsgrad $U_{EEV}$ des Expansionsventils und die Leistung, insbesondere die Drehzahl Uc des Kompressors als Stellgrößen geregelt werden, sowie eine entsprechend ausgerüstete Kompressionskälteanlage.

Derartige Kompressionskälteanlagen werden seit langer Zeit in vielfältiger Weise eingesetzt, beispielsweise zum Lagern frischer Lebensmittel bei reduzierter Temperatur oder zum Tiefkühlen von Lebensmitteln. Dabei muss zum einen die Kühlraumtemperatur geregelt werden, um optimale Lagerbedingungen zu schaffen, und zum anderen muss der Kältekreislauf geregelt werden, um die benötigte Kälteleistung zur Verfügung zu stellen und einen stabilen Betrieb des Kältekreislaufs zu gewährleisten.

Die Regelung der Kühlraumtemperatur erfolgt üblicherweise dadurch, dass der Kompressor in Abhängigkeit der Kühlraumtemperatur ein- und ausgeschaltet wird. Das heißt, bei Erreichen eines oberen Grenzwertes der Kühlraumtemperatur wird der Kompressor eingeschaltet, so dass der Kältekreislauf am Verdampfer Kälteleistung zur Verfügung stellt. Erreicht die Kühlraumtemperatur einen unteren Grenzwert, so wird der Kompressor wieder abgeschaltet, woraufhin das Expansionsventil schließt und der Kältekreislauf keine weitere Kälte erzeugt. Der Transport der Kälte vom als Wärmetauscher ausgebildeten Verdampfer zum eingelagerten Kühlgut erfolgt üblicherweise über eine erzwungene Luftumwälzung. Hierfür ist ein Lüfter vorgesehen, welcher die Umwälzung der Luft bewirkt und gleichzeitig durch den erhöhten Luftdurchsatz durch den Verdampfer den Wärmetauscherwirkungsgrad verbessert. Die Verdampfer-Lüfter-Einheit wird üblicherweise als Luftkühler bezeichnet. Üblicherweise wird dieser Verdampferlüfter zusammen mit dem Kompressor ein- und ausgeschaltet, wobei aber auch ein Nachlaufen des Lüfters vorgesehen sein kann, um die Restkälte des Verdampfers auszunutzen.

Neben der stabilen Zurverfügungstellung einer ausreichenden Kälteleistung dient die Regelung des Kältekreislaufs dazu, den Wirkungsgrad des Verdampfers zu optimieren. Der Wirkungsgrad hängt dabei einerseits von dem Befüllungsgrad des Verdampfers ab, also davon, welcher Teil des Verdampfers mit Nassdampf und welcher Teil mit überhitztem Kühlmedium gefüllt ist. Je größer der Anteil des Nassdampfes, also je geringer die Überhitzung, desto größer ist die wirksame Verdampferoberfläche und damit die Kühlleistung des Verdampfers. Zum anderen hängt der Wirkungsgrad des Verdampfers von der Verdampfungstemperatur ab, da die abgegebene Kühlleistung umso größer ist, je größer die Temperaturdifferenz zwischen der Verdampfungstemperatur und der Kühlraumtemperatur ist.

Bei feuchtesensitivem Kühlgut besteht jedoch das Problem, dass die Entfeuchtung des Kühlgutes mit zunehmender Temperaturdifferenz ebenfalls zunimmt. Hier wird daher eine einen geringen Wert nicht überschreitende Temperaturdifferenz gefordert.

Der Erfindung liegt die Aufgabe zugrunde, ein Verfahren und eine Kompressionskälteanlage der eingangs genannten Art anzugeben, die eine Optimierung des Wirkungsgrades des Verdampfers ermöglichen. Zugleich soll eine Berücksichtigung der Entfeuchtung der Kühlraumluft ermöglicht werden.

Diese Aufgabe wird dadurch gelöst, dass bei der Bestimmung der Stellwerte aus der jeweiligen Abweichung der Regelgrößen von ihrem Sollwert die Kopplung der Regelgrößen durch Entkopplungsglieder mit zuvor bestimmten Entkopplungsfunktionen zumindest näherungsweise kompensiert wird.

Außerdem wird die Aufgabe durch eine entsprechend ausgebildete Kompressionskälteanlage gelöst.

Durch die Kompensation der Kopplung der Regelgrößen durch die Entkopplungsglieder wird eine Regelungsstruktur ermöglicht, die zumindest annähernd zwei entkoppelten Regelkreisen entspricht. Damit kann eine stabilere und genauere Regelung erreicht werden. Auch kann durch die entkoppelte Regelung ein Aufschwingen des Regelkreises verhindert werden. Es hat sich gezeigt, dass ein näherungsweise Entkopplung bereits ausreichen kann.

Als Regelgrößen für die Verdampferregelung werden bevorzugt der Verdampfungsdruck $p_0$ am Verdampferausgang und die Temperatur $T_{0h}$ des überhitzten Kältemittels am Verdampferausgang verwendet. Die Temperatur $T_{0h}$ lässt sich beispielsweise mittels Anlegefühler oder Tauchfühler am Verdampferausgang problemlos direkt messen. Ebenso lässt sich der Verdampfungsdruck $p_0$ am Verdampferausgang problemlos direkt messen, während eine direkte Messung der Verdampfungstemperatur $T_0$ am Verdampferausgang nicht möglich ist. Die Verdampfungstemperatur $T_0$ am Verdampferausgang stimmt auch nicht mit der Verdampfungstemperatur am Verdampfereingang überein, da sie vom Verdampfungsdruck $p_0$ abhängig ist und sich dieser aufgrund des Strömungswiderstandes im Verdampferrohrleitungssystem vom Verdampfereingang zum Verdampferausgang ändert. Eine Berechnung der Verdampfungstemperatur am Verdampferausgang aus der Temperatur am Verdampfereingang ist daher nur verhältnismäßig ungenau möglich.

Die zu regelnde Verdampferleistung $Q_0$ hängt, wie bereits ausgeführt, vom Befüllungsgrad des Verdampfers und damit vom Überhitzungsgrad ab. Dieser wird bestimmt durch die Differenz zwischen der Temperatur $T_{0h}$ des überhitzten Kühlmediums am Verdampferausgang und der Verdampfungstemperatur $T_0$. Die Temperatur $T_{0h}$ kann

problemlos direkt gemessen, die Temperatur $T_0$ aus dem gemessenen Druck $p_0$ errechnet werden.

Nach einer Ausgestaltung der Erfindung, die auch unabhängig beansprucht wird, wird die Zuordnung der Regelgrößen zu den Stellgrößen so vorgenommen, dass eine möglichst geringe Kopplung zwischen der Regelkreisen gegeben ist. Bereits durch diese Maßnahme kann die Regelgüte deutlich verbessert werden.

Bevorzugt wird die Stellgröße Öffnungsgrad des Expansionsventils $U_{EEV}$ der Regelgröße Verdampfungsdruck $p_0$ und die Stellgröße Leistung, insbesondere Drehzahl des Kompressors $U_c$ der Regelgröße Temperatur des überhitzten Kältemittels am Verdampferausgang $T_{0h}$ zugeordnet. Durch diese Stellgrößen-Regelgrößen-Zuordnung wird eine geringere Kopplung über die Koppelzweige erreicht als bei umgekehrter Zuordnung, wie sie bei bisherigen Regelungsstrukturen vorgenommen wird. Mit anderen Worten, durch die bevorzugte Regelgrößen-Stellgrößen-Zuordnung wird der Einfluss der Koppelstrecken auf das Übertragungsverhalten der Strecke möglichst gering gehalten.

Nach einer weiteren Ausgestaltung der Erfindung werden stationäre Entkopplungsglieder verwendet. Es hat sich herausgestellt, dass die Restkopplung bei Verwendung stationärer Entkopplungsglieder verhältnismäßig gering ist. Andererseits können stationäre Entkopplungsglieder einfach realisiert werden.

Nach einer weiteren Ausgestaltung der Erfindung wird der Sollwert für den Verdampfungsdruck $p_0$ in Abhängigkeit von der Kühlraum-Isttemperatur $T_{CSR-ist}$ stets so gewählt, dass die Differenz $\Delta T_m$ zwischen der Kühlraum-Isttemperatur $T_{CSR-ist}$ und der Verdampferoberflächentemperatur $T_0$ einen vorgegebenen kleinen Wert, insbesondere ca. 6 bis 8°C, nicht überschreitet. Durch diese Sollwertvorgabe wird erreicht, dass die Kühlraumluft möglichst wenig entfeuchtet wird. Eine derartige Wahl ist daher insbesondere bei feuchtesensitivem Kühlgut vorteilhaft.

Nach einer anderen Ausgestaltung der Erfindung wird der Verdampfungsdruck $p_0$ entsprechend dem Auslegungspunkt der Kälteanlage, also entsprechend dem Sollwert der Kühlraumtemperatur, so gewählt, dass die dem Verdampfungsdrucksollwert $p_{0-soll}$ entsprechende Verdampfungstemperatur $T_0$ um einen konstanten Betrag, insbesondere ca. 10 °C, unterhalb der Kühlraumsolltemperatur $T_{CSR-soll}$ liegt. Eine derartige Wahl hat sich bei nicht feuchtesensitivem Kühlgut als vorteilhaft herausgestellt, bei welchem eine große Temperaturdifferenz zwischen Kühlraumtemperatur und Verdampferoberflächentemperatur und damit eine starke Entfeuchtung kein Problem darstellen. Durch eine große Temperaturdifferenz ergibt sich andererseits eine große Kälteleistung des Verdampfers.

Nach einer weiteren Ausgestaltung der Erfindung wird der Sollwert $T_{0h-soll}$ für die Temperatur des überhitzten Kältemittels in Abhängigkeit von der Kühlraum-Isttemperatur $T_{CSR-ist}$ so gewählt, dass sich ein Überhitzungsverhältnis $\Delta T_{0h} / \Delta T_1$ von 0,65 ergibt, wobei $\Delta T_{0h}$ die Differenz der Temperatur $T_{0h}$ des überhitzten Kältemittels am Verdampferausgang und der Verdampfungstemperatur $T_0$ und $\Delta T_1$ die Differenz der Kühlraumlufttemperatur $T_{CSR-1}$ am Eingang des Verdampfers und der Verdampfungstemperatur $T_0$ ist. Damit kann ein hoher Wirkungsgrad des Verdampfers, nämlich von 100 % gemäß DIN-Norm, und zugleich eine stabile Regelung ohne die Gefahr von Durchschlägen flüssigen Kältemittels auf den Kompressor erreicht werden.

Nach einer weiteren Ausgestaltung der Erfindung werden die Sollwerte vorverarbeitet, um sicherzustellen, dass der realisierbare Regelbereich eingehalten wird. Damit kann vorteilhafterweise der Tatsache Rechnung getragen werden, dass die Stellgrößen in einem realen System nur in einem begrenzten Intervall realisierbar sind.

Bevorzugt wird durch die Sollwertvorverarbeitung auch ein Unterschreiten des minimal messbaren Überhitzungswertes verhindert. Damit kann gewährleistet werden, dass das Kältemittel am Verdampferausgang vollständig verdampft ist und ein stabiles Überhitzungssignal erhalten wird.

Ebenfalls bevorzugt wird durch die Sollwertverarbeitung auch ein sprunghafter Übergang von einem Sollwert auf einen neuen Sollwert verhindert, indem anstelle des Sprunges eine Sollwertrampe generiert wird. Hierdurch können Überschwinger wirkungsvoll verhindert werden.

Das erfindungsgemäße Verfahren kann auch bei Anlagen mit einem nur ein- und ausschaltbaren Kompressor angewendet werden, indem die Regelung in einer Kaskadenstruktur durchgeführt wird. Dabei bildet die Verdampfungsdruckregelung bevorzugt den inneren Regelkreis und die Überhitzungsregelung den äußeren Regelkreis. Damit lässt sich auch bei Anlagen mit nur schaltendem Kompressor ein optimaler Wirkungsgrad des Verdampfersystems gewährleisten.

Die Erfindung kann außerdem bei Anlagen mit mehreren parallel betriebenen Verdampfern angewendet werden, indem jeder Verdampfer einen eigenen Regelkreis bildet und der Arbeitspunkt jedes Verdampfers über ein zugeordnetes Expansionsventil und ein jedem Verdampfer nachgeschaltetes weiteres Ventil eingeregelt wird. Somit können auch Verbundkälteanlagen vorteilhaft in der erfindungsgemäßen Weise betrieben werden, wobei das dem Verdampfer nachgeschaltete Ventil die Regelungsaufgabe übernimmt, die bei Anlagen mit nur einem Verdampfer wie beschrieben der Kompressor wahrnimmt.

Nach einer weiteren Ausgestaltung der Erfindung, die sich auf Verfahren bezieht, bei welchen die Kühlraumtemperatur durch Ein- und Ausschalten des Kompressors und/oder des Verdampferlüfters geregelt wird, und die auch für sich beansprucht wird, wird die untere Schaltgrenze, das heißt die Temperatur des Kühlraums, bei welcher der Kompressor ausschaltet, automatisch, insbesondere von Schaltzyklus zu Schaltzyklus so angepasst, dass die Kühlraumsolltemperatur nicht unter eine vorgegebene Minimaltemperatur sinkt. Hierdurch können Überschwinger der Kühlraumtemperatur unter die untere Grenze der Kühlraumsolltemperatur verhindert und damit ein Energieaufwand für eine unnötige Kühlung vermieden werden.

Nach einer weiteren Ausgestaltung der Erfindung wird die tatsächliche Verdampferleistung $Q_{0est}$, insbesondere anhand des Ventilöffnungsgrades, geschätzt und mit einem vorgegebenen Nennwert verglichen, wobei bei Unterschreiten des Nennwerts um einen vorgegebenen Betrag automatisch ein Abtauvorgang für den Verdampfer eingeleitet wird. Diese Ausgestaltung ermöglicht ein an die tatsächliche Eisbildung besser angepasstes Abtauen des Verdampfers, indem ein Abtauen erst dann eingeleitet wird, wenn die geschätzte Verdampferleistung so stark absinkt, dass der zum Abtauen erforderliche Energieaufwand geringer ist als der Energieverlust durch den vereisten Verdampfer. Damit kann ein besonders energiesparender Betrieb der Anlage gewährleistet werden.

Ausführungsbeispiele der Erfindung sind in der Zeichnung dargestellt und werden nachfolgend beschrieben. Es zeigen, jeweils in schematischer Darstellung,

Fig. 1 die Gesamtanordnung einer Kompressionskälteanlage,

Fig. 2 die Gesamtregelungsstruktur einer Verdampferregelung,

Fig. 3a den Verlauf der Verdampfungstemperatur bei einer ersten Variante,

Fig. 3b den Verlauf der Verdampfungstemperatur bei einer zweiten Variante,

Fig. 4 die Vorsteuerung des Überhitzungssollwerts,

Fig. 5 eine Verbundkälteanlage mit mehreren Verdampfern,

Fig. 6 die Regelungsstruktur des Verdampfers bei einer Kompressionskälteanlage mit einem nur schaltenden Kompressor,

Fig. 7 die Anpassung des unteren Grenzwerts der Kühlraumtemperatur,

Fig. 8 die Struktur einer Einrichtung zur Abtauregelung,

Fig. 9 ein Diagramm des Einflusses der Überhitzung auf die Verdampferleistung,

Fig. 10 eine Expansionsventilkennlinienschar, und

Fig. 11 die Regelungsstruktur der Gesamtanlage.

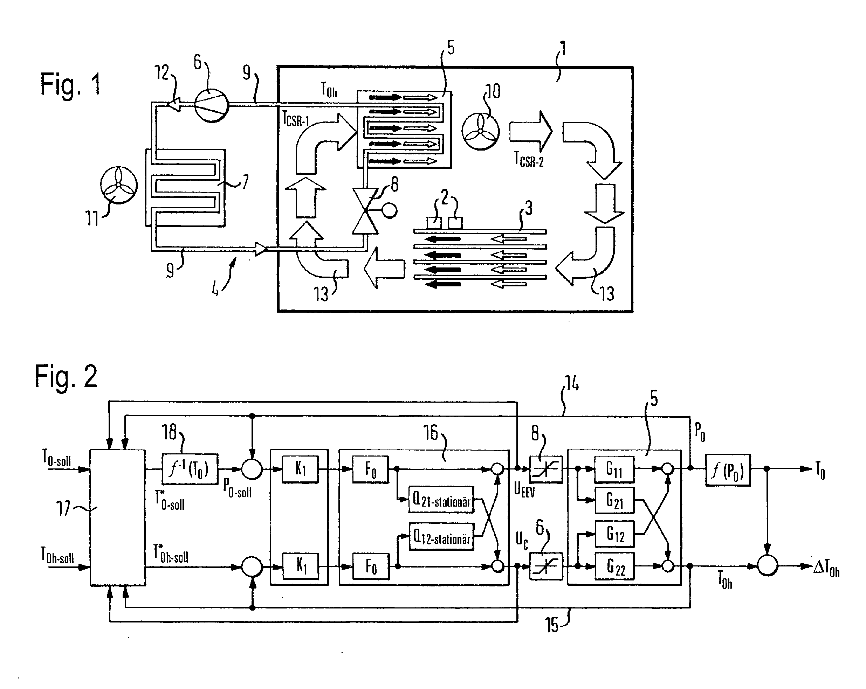

Die in Fig. 1 dargestellte Kompressionskälteanlage umfasst einen Kühlraum 1, in welchem Kühlgut 2 beispielsweise auf Paletten 3 angeordnet ist. In Kühlraum 1 ist außerdem der Verdampfer 5 eines Kältekreislaufs 4 untergebracht, der des weiteren einen Kompressor 6, einen Kondensator 7 und ein Expansionsventil 8 umfasst. Verdampfer 5, Kompressor 6, Kondensator 7 und Expansionsventil 8 sind durch ein geschlossenes Rohrleitungssystem 9 miteinander verbunden. Außerdem ist beim Verdampfer 5 ein Lüfter 10 und beim Kondensator 7 ein Lüfter 11 angeordnet.

Der Kältekreislauf 4 enthält ein Kältemittel, welches in bekannter Weise durch den Kompressor 6 in Richtung der Pfeile 12 umgewälzt wird. Über den Lüfter 11 wird dem Kondensator 7 Umgebungsluft zur Kühlung zugeführt. Der beim Verdampfer 5 angeordnete Lüfter 10 bewirkt dagegen eine Umwälzung der Luft im Kühlraum 1 derart, dass diese einerseits durch den Verdampfer 5 und andererseits durch das Kühlgut, wie mit Pfeilen 13 angegeben, umgewälzt wird. Auf diese Weise wird die am Verdampfer 5 erzeugte Kälte zum Kühlgut transportiert. Verdampfer 5 und Kondensator 7 sind als Wärmetauscher ausgebildet mit möglichst großer Oberfläche, um einen schnellen Wärmeaustausch zu ermöglichen.

Die Kühlleistung des Verdampfers 5 in Bezug auf den Kühlraum 1 hängt von der Verdampferoberfläche A, dem Wärmedurchgangskoeffizienten k sowie von der Temperaturdifferenz zwischen der Verdampferoberfläche und der Kühlraumluft ab. Es gilt:

$$\dot{Q}_0 = k \cdot A \cdot \Delta T_m \qquad \text{(Gleichung 1)}$$

$\Delta T_m$ ist die mittlere logarithmische Temperaturdifferenz, für die gilt:

$$\Delta T_m = \frac{\Delta T_1 - \Delta T_2}{\ln \dfrac{\Delta T_1}{\Delta T_2}}$$

(Gleichung 2)

mit

$\Delta T_1 =$ Temperaturdifferenz zwischen der Kühlraumlufttemperatur $T_{CSR-1}$ beim Eintritt in den Verdampfer 5 und der Kühlmitteltemperatur $T_R$

$\Delta T_2 =$ Temperaturdifferenz zwischen der Kühlraumlufttemperatur $T_{CSR-2}$ am Ausgang des Verdampfers 5 und der Kühlmitteltemperatur $T_R$

Die Kühlmitteltemperatur $T_R$ entspricht am Einspritzpunkt in den Verdampfer 5 der Verdampfungstemperatur $T_0$, die durch den herrschenden Druck im Verdampfersystem $p_0$ eindeutig bestimmt ist. Werden die strömungsbedingten Druckverluste über das Rohrleitungssystem vernachlässigt, bleiben der Verdampfungsdruck $p_0$ und somit auch die Verdampfungstemperatur $T_0$ trotz der im Verdampfer 5 zugeführten Wärmeenergie solange konstant, bis der Kältemittelnassdampf vollständig verdampft ist. Dann beginnt der Überhitzungsprozess des gasförmigen Kältemittels und die Kältemitteltemperatur $T_R$ steigt von der Verdampfungstemperatur $T_0$ auf die Temperatur des überhitzten Kältemittelgases $T_{0h}$ an.

Das heißt, ein Teil des Verdampfers 5 ist mit Kältemittelnassdampf mit der Verdampfungstemperatur $T_0$ gefüllt, der verbleibende Teil des Verdampfers 5 aber mit gasförmigem überhitztem Kältemittel. Die wirksame Temperaturdifferenz $\Delta T_m$ hängt also auch von der Temperaturdifferenz zwischen der Temperatur des überhitzten Kältemittels am Verdampferausgang $T_{0h}$ und der Verdampfungstemperatur $T_0$ ab. Diese Temperaturdifferenz wird als Überhitzung $\Delta T_{0h}$ bezeichnet:

$$\Delta T_{0h} = T_{0h} - T_0$$

(Gleichung 3)

Die vom Kältemittelkreislauf zur Verfügung gestellte Kälteleistung berechnet sich andererseits nach folgender Formel:

$$\dot{Q}_0 = m \cdot \Delta h$$

(Gleichung 4)

mit

$m =$ Kältemittelmassestrom und

$\Delta h =$ Enthalpiedifferenz

Das heißt, je größer der Kältemittelmassestrom m im Kältemittelkreislauf 4 und je größer die Enthalpiedifferenz $\Delta h$, desto größer ist die zur Verfügung gestellte Kälteleistung $\dot{Q}_0$. Der Kältemittelmassestrom m hängt dabei einerseits von der Leistung des Kompressors 6 und andererseits vom Öffnungsgrad des Expansionsventils 8 ab. Die Enthalpiedifferenz $\Delta h$ hängt sowohl vom Arbeitspunkt des Kältemittelkreislaufs, also von der Verdampfungstemperatur $T_0$, als auch von der Überhitzung $\Delta T_{0h}$ ab.

Um die an den Kühlraum 1 abgebbare Kälteleistung $\dot{Q}_0$ des Verdampfers 5 zu regeln, ist es also erforderlich, sowohl die Verdampfungstemperatur $T_0$ als auch die Überhitzung $\Delta T_{0h}$ als interne Größen des Kältekreislaufs 4 zu regeln.

Fig. 2 zeigt eine erfindungsgemäße Regelungsstruktur zur Regelung dieser Größen $T_0$ und $\Delta T_{0h}$ als Zielgrößen der Regelung.

Die in Fig. 2 dargestellte Regelungsstruktur umfasst zwei miteinander gekoppelte Regelkreise 14, 15. Der erste Regelkreis 14 umfasst den Verdampfer 5 und das Expansionsventil 8 sowie einen insbesondere als Proportional-Integral-Regler ausgebildeten Regler $K_1$, wobei als Regelgröße der Verdampfungsdruck $p_0$ im Verdampfer 5 und als Stellgröße der Öffnungsquerschnitt $U_{EEV}$ des Expansionsventils 8 dienen. Die Zielgröße Verdampfungstemperatur $T_0$ ergibt sich aus der Regelgröße $p_0$ als eindeutige Funktion $f(p_0)$.

Die zweite Regelstrecke 15 umfasst den Verdampfer 5 und den Kompressor 6 sowie einen insbesondere als

5

Proportional-Integral-Regler ausgebildeten Regler $K_2$. Als Regelgröße dient die Temperatur $T_{0h}$ des überhitzten gasförmigen Kältemittels am Ausgang des Verdampfers 5 und als Stellgröße die Drehzahl Uc des Kompressors 6. Aus der Regelgröße $T_{0h}$ ergibt sich zusammen mit der Zielgröße $T_0$ die zweite Zielgröße $\Delta T_{0h}$ gemäß obiger Gleichung 3.

Wie in Fig. 2 dargestellt, sind die beiden Regelkreise 14 und 15 miteinander gekoppelt. Das heißt, jede Änderung des Öffnungsquerschnitts $U_{EEV}$ des Expansionsventils 8 führt nicht nur gemäß einer Funktion $G_{11}$ zu einer Änderung des Verdampfungsdrucks $p_0$, sondern zugleich gemäß einer Funktion $G_{21}$ zu einer Veränderung der Temperatur $T_{0h}$ des überhitzten gasförmigen Kältemittels am Ausgang des Verdampfers 5. Ebenso führt eine Veränderung der Drehzahl $U_c$ des Kompressors 6 nicht nur gemäß einer Funktion $G_{22}$ zu einer Änderung der Temperatur $T_{0h}$ sondern auch gemäß einer Funktion $G_{12}$ zu einer Änderung des Verdampfungsdrucks $p_0$.

Um diese Kopplung zwischen den beiden Regelkreisen 14 und 15 auszugleichen, weisen die beiden Regelkreise 14, 15 Entkopplungsglieder 16 auf, durch welche die Kopplung zumindest näherungsweise aufgehoben wird. Die Entkopplungsglieder 16 bestehen dabei zum einen jeweils aus einer Entkopplungsfunktion $F_0$ für den Hauptzweig und aus einer Entkopplungsfunktion $Q_{21}$ bzw. $Q_{12}$ für den Koppelzweig. Zusammen mit der Reglerfunktion der beiden Regler $K_1$ und $K_2$ wird dadurch die Kopplung zwischen den beiden Regelstrecken 14, 15 zumindest näherungsweise aufgehoben, so dass das Regelungssystem insgesamt wie ein System mit zwei nicht gekoppelten Regelkreisen behandelt werden kann.

Bei der Vorgabe des Sollwerts für den Verdampfungsdruck $p_0$, der wie gesagt eindeutig von der Verdampfungstemperatur $T_0$ abhängt, wird zwischen zwei Fällen unterschieden:

Im Fall feuchtesensitiven Kühlguts wird der Sollwert $P_{0\text{-soll}}$ für den Verdampfungsdruck so gewählt, dass sich eine möglichst konstante kleine Temperaturdifferenz $\Delta T_1$ zwischen der Kühlraumtemperatur $T_{CSR}$ und der Verdampfungstemperatur $T_0$ ergibt, um die Entfeuchtung des Kühlgutes möglichst gering zu halten. Der Sollwert $T_{0\text{-soll}}$ der Verdampfungstemperatur, aus dem sich der Sollwert $p_{0\text{-soll}}$ für den Verdampfungsdruck ergibt, berechnet sich daher nach folgender Gleichung:

$$T_{0\text{-Soll-a}}\ (t) = T_{CSR}(t) - \Delta T_{1\text{-Soll}} \qquad\qquad \text{(Gleichung 6)}$$

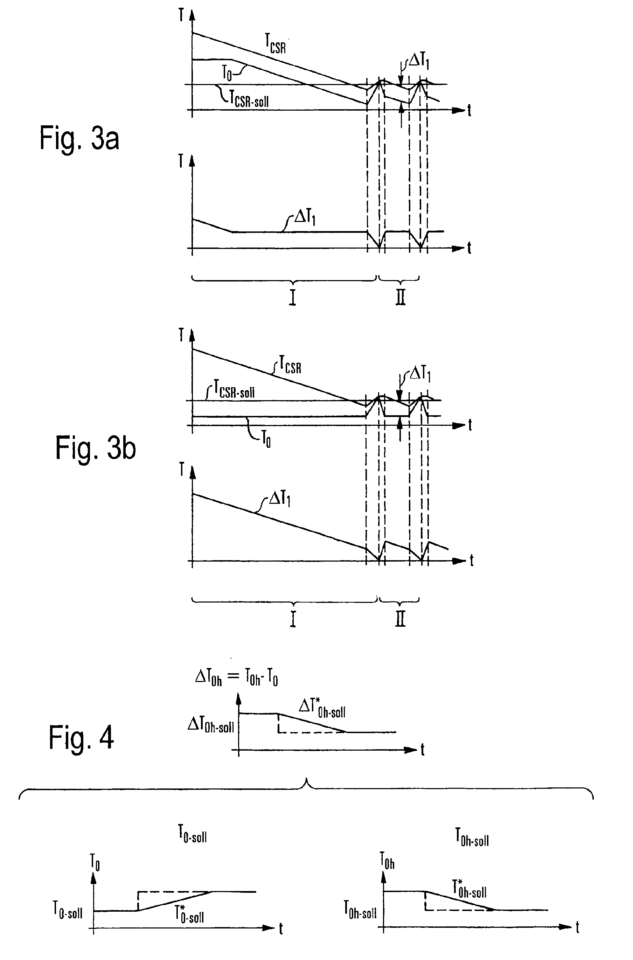

Die Temperaturdifferenz $\Delta T_{1\text{-Soll}}$ wird beispielsweise auf einen Wert zwischen 6° und 8°C eingestellt. Der sich daraus ergebende Temperaturverlauf ist in Fig. 3a dargestellt, und zwar in der oberen Hälfte der Verlauf der Kühlraumtemperatur $T_{CSR}$ und der Verdampfungstemperatur $T_0$ sowie des Sollwerts der Kühlraumtemperatur $T_{CSR\text{-Soll}}$ und in der unteren Hälfte der Verlauf der Temperaturdifferenz $\Delta T_1$ zwischen der Kühlraumtemperatur $T_{CSR}$ und der Verdampfungstemperatur $T_0$.

Fig. 3a zeigt neben der Anfangsphase I, in welcher der Sollwert der Verdampfungstemperatur $T_0$ mit der Kühlraumtemperatur $T_{CSR}$ kontinuierlich abnimmt, auch einen Kühlzyklus II zwischen zwei Einschaltzeiten des Kompressors 6. Man erkennt, dass die Temperaturdifferenz $\Delta T_1$ in der Anfangsphase auf einem konstanten kleinen Wert verharrt und bis auf die Ausschaltzeiten des Kompressors 6 diesen auch während des nachfolgenden Kühlzyklus II sowie den weiteren Kühlzyklen einhält.

Im Falle nicht feuchtesensitiven Kühlguts muss auf die Entfeuchtung keine Rücksicht genommen werden. Die Temperaturdifferenz $\Delta T_1$ zwischen der Kühlraumtemperatur $T_{CSR}$ und der Verdampfungstemperatur $T_0$ kann daher auch größere Werte annehmen. Um eine möglichst große Kühlleistung zu erreichen, wird daher die Verdampfungstemperatur $T_0$ konstant auf einen möglichst kleinen Temperaturwert, der insbesondere einige Grad, beispielsweise 10 °C, unter dem Auslegungspunkt der Anlage, also unter dem Sollwert $T_{CSR\text{-soll}}$ der Kühlraumtemperatur liegt, eingeregelt.

Der Temperaturverlauf in diesem Fall ist in Fig. 3b dargestellt, und zwar wieder oben der Verlauf der Kühlraumtemperatur $T_{CSR}$ und der Verdampfungstemperatur $T_0$ sowie des sollwerts der Kühlraumtemperatur $T_{CSR\text{-Soll}}$ und unten der Verlauf der Temperaturdifferenz $\Delta T_1$ zwischen der Kühlraumtemperatur $T_{CSR}$ und der Verdampfungstemperatur $T_0$. Auch hier ist neben der Anfangsphase I ein erster Kühlzyklus II dargestellt.

Die Sollwertberechung für die Regelgröße $T_{0h}$ erfolgt in Abhängigkeit der Kühlraumisttemperatur $T_{CSR\text{-ist}}$, und zwar derart, dass sich stets ein Überhitzungsverhältnis $\Delta T_0 / \Delta T_1$ von 0,65 ergibt, wobei $\Delta T_1$ die Differenz der Kühlraumluft $T_{CSR\text{-}1}$ am Eingang des Verdampfers 5 und der Verdampfungstemperatur $T_0$ ist. Der Sollwert berechnet sich also unter Berücksichtigung von Gleichung 3 wie folgt:

$$T_{0h\text{-soll}} = \Delta T_{0h\text{-soll}} + T_{0\text{-ist}}$$

$$= 0{,}65\ (T_{CSR\text{-ist}} - T_{0\text{-ist}}) + T_{0\text{-ist}} \qquad\qquad \text{(Gleichung 5)}$$

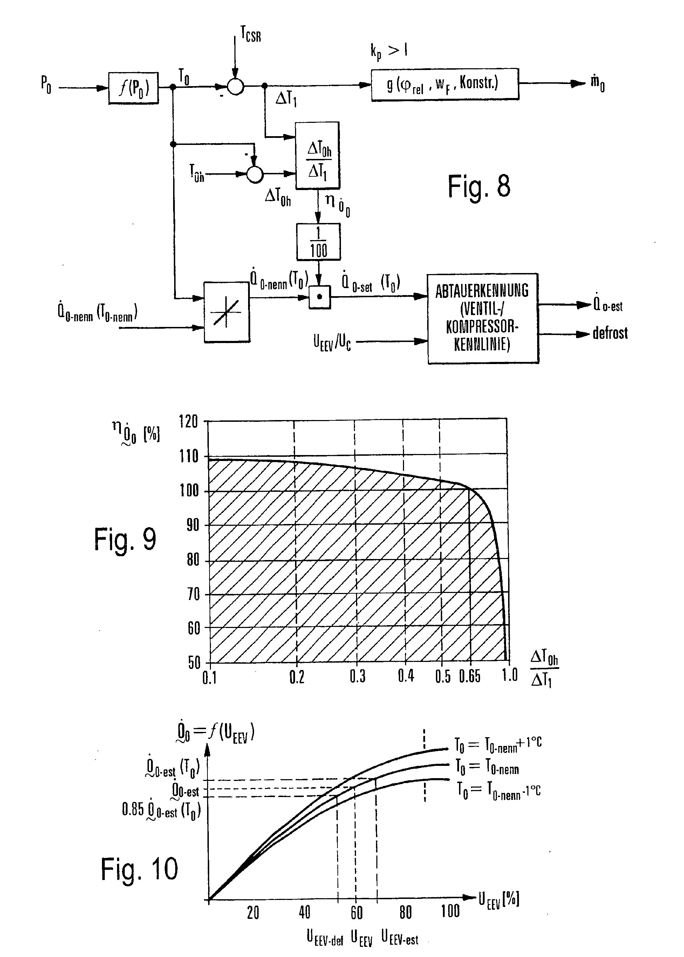

Wie man in Fig. 9 sieht, kann mit der Einstellung eines Überhitzungsverhältnisses von 0,65 eine Kälteleistung des Verdampfers 5 von 100 % gemäß DIN EN 328 erreicht werden, wobei ein noch kleineres Überhitzungsverhältnis nur geringfügig mehr Kälteleistung bringen würde, andererseits die Regelgüte aber stark abnimmt und auch die Gefahr eines Durchschlagens von flüssigem Kältemittel auf den Kondensator 6 besteht. Andererseits erkennt man in Fig. 9, dass bei einem größeren Überhitzungsverhältnis die Kälteleistung des Verdampfers 5 stark abnimmt. Somit wird durch die Regelung des Sollwerts $T_{0h-soll}$ für die Temperatur des überhitzten Kältemittels in Abhängigkeit der Kühlraum-Isttemperatur erreicht, dass die Verdampferleistung stets optimal ist.

Wie in Fig. 2 dargestellt, wird der so festgelegte Sollwert $T_{0-Soll}$ nicht direkt zur Bestimmung des Sollwerts $p_{0-soll}$ verwendet, sondern es wird eine Sollwertvorverarbeitung durch ein Sollwertvorverarbeitungsglied 17 durchgeführt. Dasselbe gilt für den Sollwert $T_{0h-Soll}$.

Die Sollwertvorverarbeitung dient dazu, eine stabile Regelung sicherzustellen, indem zu kleine Überhitzungswerte $\Delta T_{0h}$ ausgeschlossen werden. Dabei muss auch sichergestellt werden, dass der Minimalwert der Überhitzung nicht durch Überschwinger unterschritten wird. Dies wird durch die Sollwertvorverarbeitung sichergestellt.

Da eine Erhöhung der Überhitzung $\Delta T_{0h}$ regelungsdynamisch unkritisch ist, genügt eine Sollwertverarbeitung für den Fall der Absenkung der Überhitzung. Wie bereits dargelegt, entspricht die Überhitzung $\Delta T_{0h}$ der Temperaturdifferenz zwischen der Temperatur $T_{0h}$ des überhitzten Kältemittels am Ausgang des Verdampfers 5 und der Verdampfungstemperatur $T_0$. Demzufolge sinkt $\Delta T_{0h}$, wenn entweder To erhöht oder $T_{0h}$ abgesenkt wird. Dies bedeutet wiederum, dass die Sollwertvorverarbeitung nur dann eingreifen muss, wenn von der Sollwertberechnung ein Verdampfungstemperatursollwert $T_{0-Soll}$ vorgegeben wird, der höher ist als der vorherige oder wenn ein Sollwert $T_{0h-soll}$ vorgegeben wird, der niedriger ist als der vorherige.

Die Sollwertvorverarbeitung erfolgt dadurch, dass anstelle des von der Sollwertberechnung vorgegebenen Sollwertsprungs ein Sollwertverlauf in Form einer Rampe vom alten Sollwert auf den neuen Sollwert generiert wird. Dies ist in Fig. 4 dargestellt.

In der oberen Hälfte von Fig. 4 ist der Sollwertverlauf $\Delta T_{oh-Soll}$ gemäß einer angenommenen Sollwertberechnung gestrichelt dargestellt. Mit durchgezogener Linie ist die dafür generierte Sollwertrampe $\Delta T^*_{oh-Soll}$ eingetragen. In der unteren Hälfte von Fig. 4 sind die entsprechenden Sollwertverläufe für die Verdampfungstemperatur $T_{o-Soll}$ und für die Temperatur des überhitzten Kältemittels am Verdampferausgang $T_{oh-Soll}$ dargestellt, die gemäß Gleichung 3 jeweils zu einem geänderten Sollwert $\Delta T_{0h-Soll}$ führen können. Auch hier ist der generierte Rampenverlauf $T^*_{0-Soll}$, $T^*_{0h-Soll}$ jeweils als durchgezogene Linie eingetragen.

Die Steigungen der Sollwertrampen werden in Abhängigkeit der dynamischen Eigenschaften der beiden Regelgrößen gewählt, wobei die trägere Regelgröße die Steigung beider Rampenfunktionen bestimmt. Um genügend Reserven zum Ausregeln eventuell auftretender Störungen zu haben, werden die Steigungen der Sollwertrampen außerdem etwas träger als die minimal realisierbare maximale Steigung der Regelgrößen gewählt.

Die Sollwertvorverarbeitung dient außerdem dazu, physikalisch unmögliche oder schädliche Sollwertvorgaben zu vermeiden. Beispielsweise werden dadurch Sollwertvorgaben vermieden, die einen Öffnungsquerschnitt $U_{EEV}$ des Expansionventils 8 von mehr als 100 %, eine die maximale Drehzahl $U_{C-max}$ des Kompressors 6 überschreitende oder dessen minimale Drehzahl $U_{C-min}$ unterschreitende Drehzahl fordern.

Im Übrigen erfolgt der Betrieb der Kälteanlage in bekannter Weise.

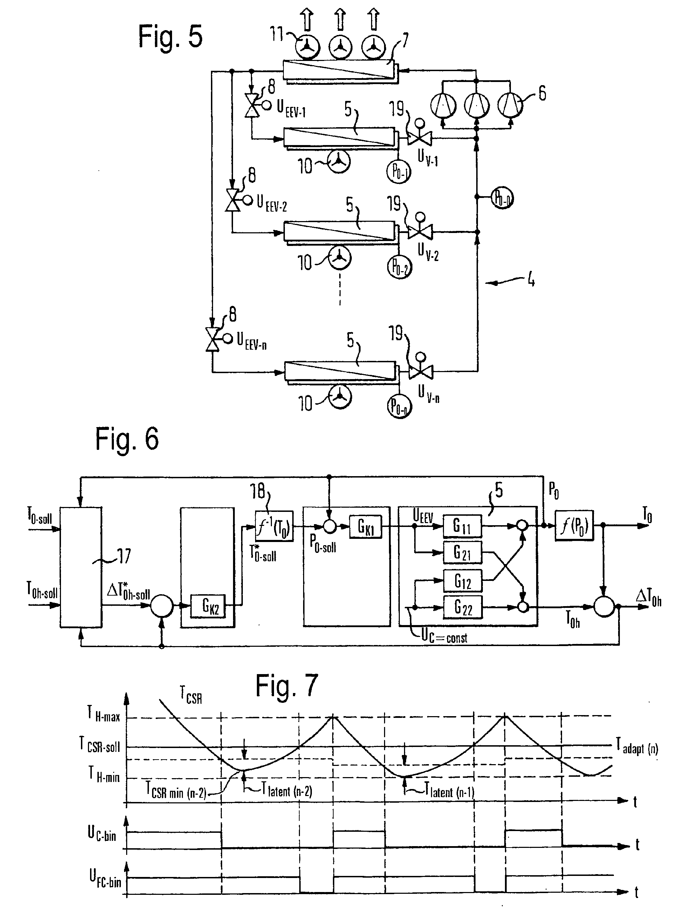

Fig. 5 zeigt eine Verbundkälteanlage mit mehreren Verdampfern 5, die parallel zueinander in den Kältekreislauf 4 geschaltet sind. Um einen ausreichenden Druck im Kältekreislauf 4 erzeugen zu können, sind im Kältekreislauf 4 drei parallel geschaltete Kompressoren 6 vorhanden. Ebenso ist der entsprechend groß ausgebildete Kondensator 7 mit drei parallelen Lüftern 11 ausgestattet.

Jeder Verdampfer 5 weist ein eigenes Expansionsventil 8 auf, welches separat regelbar ist. Außerdem ist jedem Verdampfer 5 ein weiteres regelbares Ventil 19 nachgeschaltet. Für jeden Verdampfer 5 ist also ein separater Regelkreis vorgesehen, über welchen die Regelgrößen Verdampfungsdruck $p_0$ und Temperatur $T_{0h}$ des überhitzten Kältemittels durch die Stellglieder Expansionsventil 8 und zweites Regelventil 19 eingeregelt werden können. Zusätzlich ist noch eine Leistungsregelung für die Kompressoren 6 vorgesehen, um sicherzustellen, dass der Saugdruck vor dem Kompressor 6 stets kleiner ist als der kleinste Verdampfungsdruck $P_{0i}$ aller Verdampfer. Im Übrigen ist der Aufbau des Kältekreislaufs 4 und die Regelungsstruktur gleich wie zuvor beschrieben. Lediglich wird hier im Gegensatz zu der zuvor beschriebenen einstufigen Anlage die Regelung der Temperatur $T_{0h}$ über das zusätzlich dem Verdampfer 5 nachgeschaltete Regelventil 19 realisiert. Der Verdampfungsdruck $p_0$ wird wie zuvor beschrieben über das Expansionsventil 8 geregelt. Auch die Entkopplungsstruktur bleibt identisch.

Fig. 6 zeigt die Regelungsstruktur für eine Kompressionskälteanlage mit einem nur schaltenden Kompressor 6. Der Unterschied zu der in Fig. 2 dargestellten Regelungsstruktur für einen Kältekreislauf mit drehzahlregelbarem Kompressor 6 besteht darin, dass der zweite Regelkreis mit der Drehzahl $U_c$ des Kompressors als Stellgröße wegfällt. Aufgrund der physikalischen Kopplung zwischen den Regelgrößen $p_0$ und $T_{0h}$ ist jedoch auch hier eine Optimierung der Verdampferleistung $\dot{Q}_0$ möglich. Hierzu wird eine Kaskadenstruktur verwendet, bei welcher die Regelung des Verdampfungsdruckes $p_0$ den inneren Regelkreis und die Regelung der Überhitzung $\Delta T_{oh}$ den äußeren Regelkreis bildet.

Der innere Regelkreis umfasst einen Druckregler $G_{K1}$, der dem Hauptstreckenregler $K_1$ von Fig. 2 entspricht. Der äußere Regelkreis umfasst einen Überhitzungsregler $G_{K2}$, dessen Sollwert $\Delta T^*_{0h-Soll}$ direkt aus den Ausgangswerten der Sollwertberechnung abgeleitet wird:

$$\Delta T^*_{0h-Soll} = T_{0h-Soll} - T_{0-Soll} \qquad \text{(Gleichung 7)}$$

Aus der Regeldifferenz des Verdampfungsdrucks $p_0$ und der Temperatur Toh des überhitzten Kältemittels berechnet der Überhitzungsregler $G_{K2}$ den Verdampfungstemperatursollwert $T^*_{0-soll}$, der zur Einhaltung des Überhitzungssollwertes $\Delta T^*_{0h-Soll}$ erforderlich ist. Daraus lässt sich der zugehörige Verdampfungssolldruck $p_{0-Soll}$ als Sollwertvorgabe für den inneren Regelkreis berechnen.

Das dynamische Verhalten des Überhitzungsreglers $G_{K2}$ muss gemäß Fig. 6 auf die Dynamik der Koppelstrecke $G_{21}$ abgestimmt sein. Für den Überhitzungsregler $G_{K2}$ kann wieder ein Standard-Proportional-Integral-Regler verwendet werden, dessen Parameter anhand empirischer Einstellverfahren ermittelt werden können.

Fig. 7 zeigt die Ausführung eines weiteren Erfindungsgedankens, gemäß welchem die untere Schaltgrenze für den Kompressor 6, das heißt, diejenige Temperatur $T_{H-adapt}$, bei welcher der Kompressor 6 ausgeschaltet wird, von Kühlzyklus zu Kühlzyklus an den tatsächlichen Temperaturverlauf $T_{CSR}$ angepasst wird. Der tatsächliche Temperaturverlauf $T_{CSR}$ ist in Fig. 3 als durchgezogene Linie eingetragen. Die gewünschte minimale und maximale Temperatur $T_{H-min}$ und $T_{H-max}$ des Kühlraums ist gestrichelt eingetragen.

Wie man sieht, liegt der tatsächliche Temperaturverlauf $T_{CSR}$ exakt innerhalb dieses Bereiches. Dies wird dadurch erreicht, dass die punktiert in Fig. 7 eingetragene untere Schaltgrenze $T_{H-adapt}$ für den Kompressor 6 in Abhängigkeit des tatsächlichen Temperaturverlaufs $T_{CSR}$ von Kühlzyklus zu Kühlzyklus angepasst wird, so dass der Kompressor 6 tatsächlich früher abschaltet und die noch vorhandene Kälte nicht zu einem Überschwingen unter die untere Grenze $T_{H-min}$ führt.

Zugleich ist in Fig. 7 noch in dem unteren Teil eine an sich bekannte Nachlaufsteuerung für den Verdampferlüfter $U_{FC-bin}$ in Gegenüberstellung zur Kompressorsteuerung $U_{C-bin}$ dargestellt. Durch diese Lüfternachlaufsteuerung kann die Restkälte noch besser ausgenutzt werden, insbesondere wenn diese von einer Vereisung des Verdampfers herrührt.

Fig. 8 zeigt schließlich noch die Struktur einer Abtauerkennungseinrichtung. Aus den gemessenen Prozessgrößen $T_{CSR}$, $p_0$ und $T_{0h}$ wird das Überhitzungsverhältnis $\Delta T_{0h}/\Delta T_1$ berechnet. Daraus lässt sich nach Fig. 9 der zu erwartende Verdampferwirkungsgrad $\eta_{Q_0}$ bestimmen.

Aus dem Anlagenauslegungswert $\dot{Q}_{0-nenn}(T_{0-nenn})$, also aus der Nennleistung des Verdampfers bei der Nennverdampfungstemperatur, und dem Wert der tatsächlichen Verdampfungstemperatur $T_0$ lässt sich die zu erwartende Nennleistung $\dot{Q}_{0-nenn}(T_0)$ des trockenen Verdampfers bei der Verdampfungstemperatur $T_0$ bestimmen. Liegen vom Verdampferhersteller keine exakten Leistungsdaten für verschiedene Verdampfungstemperaturen vor, kann die Nennleistung wie folgt abgeschätzt werden: bei Nennverdampfungstemperatur $T_{0-nenn}$ ist die zur Verfügung stehende Kälteleistung des trockenen Verdampfers die angegebene Herstellerleistung $\dot{Q}_{0-nenn}$. Bei niedrigeren Verdampfungstemperaturen sinkt die zur Verfügung stehende Leistung und bei höheren steigt sie. Die Verdampferwirkungsgradänderung beträgt ca. 3 % pro °C Verdampfungstemperaturänderung. Es gilt somit:

$$\dot{Q}_{0-nenn}(T_0) = \dot{Q}_{0-nenn}(T_{0-nenn}) \cdot [1 + 0{,}03 \cdot (T_0 - T_{0-nenn})] \qquad \text{(Gleichung 8)}$$

Multipliziert mit dem aus dem Überhitzungsverhältnis bestimmten Verdampferwirkungsgrad $1:100 \cdot \eta_{Q_0}$ ergibt sich die zu erwartende Kälteleistung des Verdampfers $\dot{Q}_{0-est}^*(T_0)$ bei blankem Verdampfer.

Aus der Kenntnis der Expansionsventil- oder Kompressorkennlinie lässt sich auf den Vereisungsgrad des Verdampfers, bzw. auf den aus der Verdampfervereisung resultierenden Leistungsverlust schließen. Am Beispiel einer Expansionsventilkennlinie ist dieses Prinzip in Fig. 10 verdeutlicht. Die Verdampfungstemperatur sei beispielsweise $T_0 = T_{0-nenn}$. Aus der zu erwartenden Kälteleistung des Verdampfers $\dot{Q}_{0-est}^*(T_0)$ bei blankem Verdampfer lässt sich wie in Fig. 10 gezeigt aus der Ventilkennlinie der zu erwartende Ventilöffnungsgrad $U_{EEV-est}$ bestimmen. Dieser wird nun mit dem tatsächlichen Ventilöffnungsgrad $U_{EEV}$ verglichen. Ist der tatsächliche Ventilöffnungsgrad signifikant kleiner als der zu erwartende Ventilöffnungsgrad $U_{EEV-est}$, so ist auch der aus dem Ventilöffnungsgrad resultierende Kältemittelmassenstrom $\dot{m}$ und somit nach Gleichung 4 auch die abgegebene Kälteleistung des Verdampfers geringer als die aufgrund des Überhitzungsverhältnisses erwartete Kälteleistung $\dot{Q}_{0-est}^*(T_0)$. Aus dem momentanen Ventilöffnungsgrad $U_{EEV}$ wird anhand der Ventil- oder Kompressorkennlinie die zugehörige tatsächliche Verdampferleistung $\dot{Q}_{0-est}$ geschätzt. Ist die geschätzte Verdampferleistung $\dot{Q}_{0-est}$ größer als ein zu definierender Leistungsschwellwert, wird keine Abtauung eingeleitet. Ist hingegen die geschätzte Verdampferleistung $\dot{Q}_{0-est}$ kleiner als der definierte Schwellwert, so ist der Leistungsverlust aufgrund der Verdampfervereisung zu groß und der Abtauprozess wird eingeleitet. Im dargestellten Beispiel wurde der Schwellwert auf 85 % der zu erwartenden Kälteleistung des Verdampfers $Q_{0\text{-est}}^{*}$ ($T_0$) bei blanken Verdampfer gesetzt.

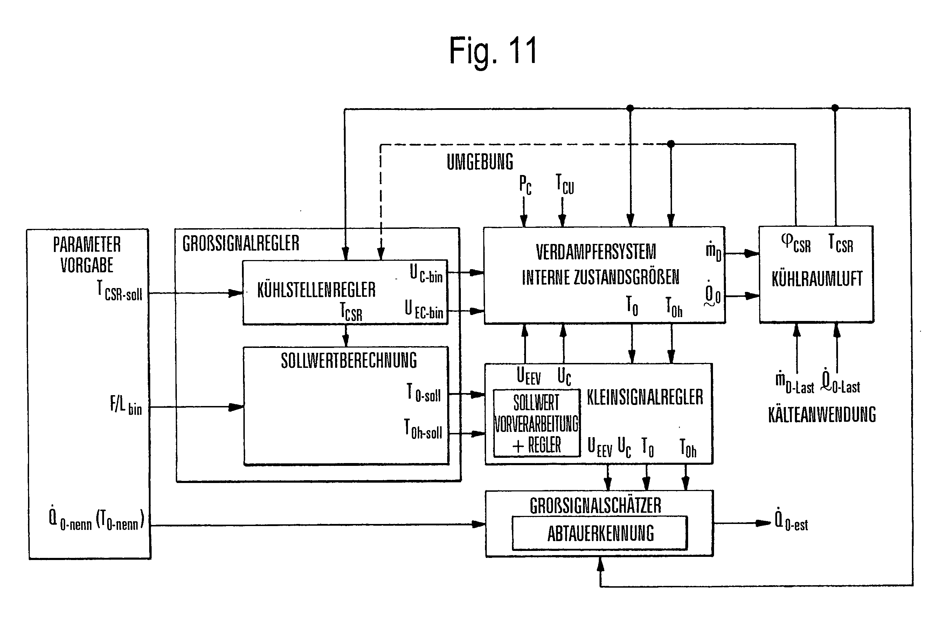

Mit dem erfindungsgemäßen Verfahren und der erfindungsgemäßen Kompressionskälteanlage mit entkoppelter Regelungsstruktur ist somit eine stabile Regelung des Verdampferkreislaufes in verschiedenen Anwendungsfällen möglich, wobei einerseits auf einen hohen Wirkungsgrad geachtet und andererseits der Entfeuchtung der Kühlraumluft Rechnung getragen werden kann. Die Regelungsstruktur der Gesamtanlage mit allen Regel-, Stell- und Störgrößen ist in Fig. 11 gezeigt.

**Bezugzeichenliste**

| | |
|---|---|
| 1 | Kühlraum |
| 2 | Kühlgut |
| 3 | Palette |
| 4 | Kühlkreislauf |
| 5 | Verdampfer |
| 6 | Kompressor |
| 7 | Kondensator |
| 8 | Expansionsventil |
| 9 | Leitung |
| 10 | Lüfter |
| 11 | Lüfter |
| 12 | Pfeil |
| 13 | Pfeil |
| 14 | erster Regelkreis |
| 15 | zweiter Regelkreis |
| 16 | Entkopplungsglied |
| 17 | Sollwertvorverarbeitungsglied |
| 18 | Sollwertumrechnungsglied |
| 19 | Regelventil |
| | |
| I | Anlaufphase |
| II | Kühlzyklus |

**Patentansprüche**

1. Verfahren zum Betreiben einer Kompressionskälteanlage, insbesondere zum Kühlen von Räumen (1), mit einem Kältekreislauf (4) umfassend einen Verdampfer (5), einen Kompressor (6), einen Kondensator (7) und ein Expansionsventil (8), bei welchem die Leistung $\dot{Q}_0$ und der Arbeitspunkt $T_0$ des Verdampfers (5) durch Vergleich des Sollwertes und des Istwertes geeigneter Regelgrößen über den Öffnungsgrad $U_{EEV}$ des Expansionsventils (5) und die Leistung, insbesondere die Drehzahl $U_C$ des Kompressors (6) als Stellgrößen geregelt werden,
**dadurch gekennzeichnet,**
**dass** bei der Bestimmung der Stellwerte aus der jeweiligen Abweichung der Regelgrößen ($p_0$, $T_{0h}$) von ihrem Sollwert die Kopplung der Regelgrößen durch Entkopplungsglieder (16) mit zuvor bestimmten Entkopplungsfunktionen ($Q_{21}$, $Q_{12}$) zumindest näherungsweise kompensiert wird.

2. Verfahren nach Anspruch 1,
**dadurch gekennzeichnet,**
**dass** als Regelgrößen der Verdampfungsdruck $p_0$ am Ausgang des Verdampfers (5) und die Temperatur $T_{0h}$ des überhitzten Kältemittels am Ausgang des Verdampfers (5) verwendet werden.

3. Verfahren zum Betreiben einer Kompressionskälteanlage, insbesondere zum Kühlen von Räumen (1), mit einem Kältekreislauf (4) umfassend einen Verdampfer (5), einen Kompressor (6), einen Kondensator (7) und ein Expansionsventil (8), bei welchem die Leistung $\dot{Q}_0$ und der Arbeitspunkt $T_0$ des Verdampfers (5) durch Vergleich des Sollwertes und des Istwertes geeigneter Regelgrößen über den Öffnungsgrad $U_{EEV}$ des Expansionsventils (5) und die Leistung, insbesondere die Drehzahl $U_c$ des Kompressors (6) als Stellgrößen geregelt werden, insbesondere nach Anspruch 1 oder 2,
**dadurch gekennzeichnet,**
**dass** die Zuordnung der Regelgrößen zu den Stellgrößen so vorgenommen wird, dass eine möglichst geringe Kopplung zwischen den Regelkreisen (14, 15) gegeben ist.

4. Verfahren nach Anspruch 3,
**dadurch gekennzeichnet,**
**dass** die Stellgröße Öffnungsgrad des Expansionsventils $U_{EEV}$ der Regelgröße Verdampfungsdruck $p_0$ und die Stellgröße Drehzahl des Kompressors $U_c$ der Regelgröße Temperatur des überhitzten Kältemittels am Verdampferausgang $T_{0h}$ zugeordnet werden.

5. Verfahren nach einem der vorhergehenden Ansprüche,
**dadurch gekennzeichnet,**
**dass** stationäre Entkopplungsglieder (16) verwendet werden.

6. Verfahren nach einem der vorhergehenden Ansprüche,
**dadurch gekennzeichnet,**
**dass** der Sollwert für den Verdampfungsdruck $p_0$ in Abhängigkeit von der Kühlraum-Isttemperatur $T_{CSR-ist}$ stets so gewählt wird, dass die Differenz $\Delta T_m$ zwischen der Ist-Temperatur $T_{CSR-ist}$ des Kühlraums (1) und der Oberflächentemperatur $T_0$ des Verdampfers (5) einen vorgegebenen kleinen Wert, insbesondere ca. 6 bis 8°C, nicht überschreitet.

7. Verfahren nach einem der vorhergehenden Ansprüche,
**dadurch gekennzeichnet,**
**dass** der Sollwert für den Verdampfungsdruck po entsprechend dem Auslegungspunkt der Kälteanlage, also entsprechend dem Sollwert der Kühlraumtemperatur, so gewählt wird, dass die dem Verdampfungsdrucksollwert $p_{0-soll}$ entsprechende Verdampfungstemperatur To um einen konstanten Betrag, insbesondere ca. 10 °C, unterhalb der Kühlraumsolltemperatur $T_{CSR-soll}$ liegt.

8. Verfahren nach einem der vorhergehenden Ansprüche,
**dadurch gekennzeichnet,**
**dass** der Sollwert $T_{0h-soll}$ für die Temperatur des überhitzten Kältemittels in Abhängigkeit von der Kühlraum-Isttemperatur $T_{CSR-ist}$ stets so gewählt wird, dass sich ein Überhitzungsverhältnis $\Delta T_{0h}/\Delta T_1$ von 0,65 ergibt, wobei $\Delta T_{0h}$ die Differenz der Temperatur $T_{0h}$ des überhitzten Kältemittels am Verdampferausgang und der Verdampfungstemperatur $T_0$ und $\Delta T_1$ die Differenz der Kühlraumlufttemperatur $T_{CSR-1}$ am Eingang des Verdampfers (5) und der Verdampfungstemperatur $T_0$ ist.

9. Verfahren nach einem der vorhergehenden Ansprüche,
**dadurch gekennzeichnet,**
**dass** die Sollwerte vorverarbeitet werden, um sicherzustellen, dass der realisierbare Regelbereich eingehalten wird.

10. Verfahren nach einem der vorhergehenden Ansprüche,
**dadurch gekennzeichnet,**
**dass** durch eine Sollwertvorverarbeitung ein Unterschreiten des minimal messbaren Überhitzungswertes verhindert wird.

11. Verfahren nach einem der vorhergehenden Ansprüche,
**dadurch gekennzeichnet,**
**dass** durch Sollwertvorverarbeitung ein sprunghafter Übergang von einem Sollwert auf einen neuen Sollwert verhindert wird, indem an dieser Stelle eine Sollwertrampe generiert wird.

12. Verfahren nach einem der vorhergehenden Ansprüche,
**dadurch gekennzeichnet,**
**dass** es bei Anlagen mit einem nur ein- und ausschaltbaren Kompressor (6) angewandt wird, indem die Regelung in einer Kaskadenstruktur durchgeführt wird.

**13.** Verfahren nach Anspruch 12,
**dadurch gekennzeichnet,**
**dass** die Verdampfungsdruckregelung den inneren Regelkreis und die Überhitzungsregelung den äußeren Regelkreis bildet.

**14.** Verfahren nach einem der vorhergehenden Ansprüche,
**dadurch gekennzeichnet,**
**dass** mehrere Verdampfer (5) parallel betrieben werden, indem jeder Verdampfer (5) einen eigenen Regelkreis bildet und der Arbeitspunkt jedes Verdampfers (5) über ein zugeordnetes Expansionsventil (8) und ein jedem Verdampfer (5) nachgeschaltetes weiteres Ventil (19) eingeregelt wird.

**15.** Verfahren zum Betreiben einer Kompressionskälteanlage, insbesondere zum Kühlen von Räumen (1), mit einem Kältekreislauf (4) umfassend einen Verdampfer (5), einen Kompressor (6), einen Kondensator (7) und ein Expansionsventil (8), bei welchem die Kühlraumtemperatur durch Ein- und Ausschalten des Kompressors (6) und/oder des Verdampferlüfters (10) geregelt wird, insbesondere nach einem der vorhergehenden Ansprüche,
**dadurch gekennzeichnet,**
**dass** die untere Schaltgrenze, das heißt, die Temperatur $T_{H-adapt}$ des Kühlraums (1), bei welcher der Kompressor (6) ausschaltet, automatisch, insbesondere von Schaltzyklus zu Schaltzyklus, so angepasst wird, dass die Kühlraumtemperatur $T_{CSR}$ nicht unter eine vorgegebene Minimaltemperatur $T_{H-min}$ sinkt.

**16.** Verfahren nach einem der vorhergehenden Ansprüche,
**dadurch gekennzeichnet,**
**dass** die tatsächliche Verdampferleistung $\dot{Q}_{0est}$ , insbesondere anhand des Ventilöffnungsgrades, geschätzt und mit einem vorgegebenen Nennwert verglichen wird, und dass bei Unterschreiten des Nennwerts um einen vorgegebenen Betrag automatisch ein Abtauvorgang für den Verdampfer (5) eingeleitet wird.

**17.** Kompressionskälteanlage, insbesondere zum Kühlen von Räumen, mit einem Kältekreislauf umfassend einen Verdampfer (5), einen Kompressor (6), einen Kondensator (7) und ein Expansionsventil (8) sowie mit Regelmitteln, durch welche die Leistung $\dot{Q}_0$ und der Arbeitspunkt $T_0$ des Verdampfers (5) durch Vergleich des Sollwertes und des Istwertes geeigneter Regelgrößen ($p_0$, $T_{0h}$) über den Öffnungsgrad $U_{EEV}$ des Expansionsventils (8) und die Leistung, insbesondere die Drehzahl $U_c$ des Kompressors (6) als Stellgrößen geregelt werden,
**dadurch gekennzeichnet,**
**dass** Mittel (16) vorgesehen sind, durch welche bei der Bestimmung der Stellwerte aus der jeweiligen Abweichung der Regelgrößen ($p_0$, $T_{0h}$) von ihrem Sollwert die Kopplung der Regelgrößen durch Entkopplungsglieder mit zuvor bestimmten Entkopplungsfunktionen ($Q_{21}$, $Q_{12}$) zumindest näherungsweise kompensiert werden.

**18.** Anlage nach Anspruch 17,
**dadurch gekennzeichnet,**
**dass** als Regelgrößen der Verdampfungsdruck $p_0$ am Ausgang des Verdampfers (5) und die Temperatur $T_{0h}$ des überhitzten Kältemittels am Ausgang des Verdampfers (5) vorgesehen sind.

**19.** Kompressionskälteanlage, insbesondere zum Kühlen von Räumen, mit einem Kältekreislauf umfassend einen Verdampfer (5), einen Kompressor (6), einen Kondensator (7) und ein Expansionsventil (8) sowie mit Regelmitteln, durch welche die Leistung $\dot{Q}_0$ und der Arbeitspunkt $T_0$ des Verdampfers (5) durch Vergleich des Sollwertes und des Istwertes geeigneter Regelgrößen ($p_0$, $T_{0h}$) über den Öffnungsgrad $U_{EEV}$ des Expansionsventils (8) und die Leistung, insbesondere die Drehzahl $U_C$ des Kompressors (6) als Stellgrößen geregelt werden, insbesondere nach Anspruch 17 oder 18,
**dadurch gekennzeichnet,**
**dass** die Zuordnung der Regelgrößen zu den Stellgrößen so vorgenommen ist, dass eine möglichst geringe Kopplung zwischen den Regelkreisen (14, 15) gegeben ist.

**20.** Anlage nach Anspruch 19,
**dadurch gekennzeichnet,**
**dass** die Stellgröße Öffnungsgrad des Expansionsventils $U_{EEV}$ der Regelgröße Verdampfungsdruck $p_0$ und die Stellgröße Drehzahl des Kompressors $U_c$ der Regelgröße Temperatur des überhitzten Kältemittels am Verdampferausgang $T_{0h}$ zugeordnet sind.

**21.** Anlage nach einem der Ansprüche 17 bis 20,

**dadurch gekennzeichnet,**
**dass** stationäre Entkopplungsglieder (16) vorgesehen sind.

**22.** Anlage nach einem der Ansprüche 17 bis 21,
**dadurch gekennzeichnet,**
**dass** Mittel vorgesehen sind, durch welche der Sollwert für den Verdampfungsdruck $p_0$ stets so gewählt wird, dass die Differenz $\Delta T_m$ zwischen der Temperatur des Kühlraums (1) und der Oberflächentemperatur des Verdampfers (5) einen vorgegebenen kleinen Wert, insbesondere ca. 6 bis 8°C, nicht überschreitet.

**23.** Anlage nach einem der Ansprüche 17 bis 22,
**dadurch gekennzeichnet,**
**dass** Mittel vorgesehen sind, durch welche der Sollwert für den Verdampfungsdruck $p_0$ entsprechend dem Auslegungspunkt der Kälteanlage, also entsprechend dem Sollwert der Kühlraumtemperatur, so gewählt wird, dass die dem Verdampfungsdrucksollwert $p_{0-soll}$ entsprechende Verdampfungstemperatur $T_0$ um einen konstanten Betrag, insbesondere ca. 10 °C, unterhalb der Kühlraumsolltemperatur $T_{CSR-soll}$ liegt.

**24.** Anlage nach einem der Ansprüche 17 bis 23,
**dadurch gekennzeichnet,**
**dass** Mittel vorgesehen sind, durch welche der Sollwert $T_{0h-soll}$ für die Temperatur des überhitzten Kältemittels in Abhängigkeit von der Kühlraum-Isttemperatur $T_{CSR-ist}$ stets so gewählt wird, dass sich ein Überhitzungsverhältnis $\Delta T_{0h}/\Delta T_1$ von 0,65 ergibt, wobei $\Delta T_{0h}$ die Differenz der Temperatur $T_{0h}$ des überhitzten Kältemittels am Verdampferausgang und der Verdampfungstemperatur $T_0$ und $\Delta T_1$ die Differenz der Kühlraumlufttemperatur $T_{CSR-1}$ am Eingang des Verdampfers (5) und der Verdampfungstemperatur $T_0$ ist.

**25.** Anlage nach einem der Ansprüche 17 bis 24,
**dadurch gekennzeichnet,**
**dass** eine Sollwertvorverarbeitung (17) vorgesehen ist, die sicherstellt, dass der realisierbare Regelbereich eingehalten wird.

**26.** Anlage nach einem der Ansprüche 17 bis 25,
**dadurch gekennzeichnet,**
**dass** eine Sollwertvorverarbeitung (17) vorgesehen ist, die ein Unterschreiten des minimal messbaren Überhitzungswertes verhindert.

**27.** Anlage nach einem der Ansprüche 17 bis 26,
**dadurch gekennzeichnet,**
**dass** die Sollwertvorverarbeitung (17) einen sprunghaften Übergang von einem Sollwert auf einen neuen Sollwert verhindert, indem sie an dieser Stelle eine Sollwertrampe generiert.

**28.** Anlage nach einem der Ansprüche 17 bis 27,
**dadurch gekennzeichnet,**
**dass** ein nur ein- und ausschaltbarer Kompressor (6) vorhanden ist und dass die Regelung eine Kaskadenstruktur aufweist.

**29.** Anlage nach Anspruch 28,
**dadurch gekennzeichnet,**
**dass** die Verdampfungsdruckregelung den inneren Regelkreis und die Überhitzungsregelung den äußeren Regelkreis bildet.

**30.** Anlage nach einem der Ansprüche 17 bis 29,
**dadurch gekennzeichnet,**
**dass** mehrere Verdampfer (5) parallel angeordnet sind, wobei jeder Verdampfer (5) einen eigenen Regelkreis bildet und jedem Verdampfer (5) ein Expansionsventil (8) zugeordnet und ein weiteres Ventil (19) nachgeschaltet ist, über welche der Arbeitspunkt des jeweiligen Verdampfers (5) einregelbar ist.

**31.** Kompressionskälteanlage, insbesondere zum Kühlen von Räumen (1), mit einem Kältekreislauf (4) umfassend einen Verdampfer (5), einen Kompressor (6), einen Kondensator (7) und ein Expansionsventil (8), und Mitteln, durch welche die Kühlraumtemperatur durch Ein- und Ausschalten des Kompressors (6) und/oder des Verdampferlüfters (10) regelbar ist, insbesondere nach einem der Ansprüche 17 bis 30,
**dadurch gekennzeichnet,**
**dass** Mittel vorgesehen sind, durch welche die untere Schaltgrenze, das heißt, die Temperatur $T_{H-adapt}$ des Kühlraums (1), bei welcher der Kompressor (6) ausschaltet, automatisch, insbesondere von Schaltzyklus zu Schaltzyklus, so angepasst wird, dass die Kühlraumtemperatur $T_{CSR}$ nicht unter eine vorgegebene Minimaltemperatur $T_{H-min}$ sinkt.

32. Anlage nach einem der Ansprüche 17 bis 31,
**dadurch gekennzeichnet,**
**dass** Mittel vorgesehen sind, durch welche die tatsächliche Verdampferleistung $\dot{Q}_{0est}$, insbesondere anhand des Ventilöffnungsgrades, geschätzt und mit einem vorgegebenen Nennwert verglichen wird, und Mittel, durch welche bei Unterschreiten des Nennwerts um einen vorgegebenen Betrag automatisch ein Abtauvorgang für den Verdampfer (5) eingeleitet wird.

Fig. 1

Fig. 2

Fig. 3a

Fig. 3b

$$\Delta T_{0h} = T_{0h} - T_0$$

Fig. 4

EP 1 355 207 A1

**Fig. 5**

**Fig. 6**

**Fig. 7**

16

Fig. 8

Fig. 9

Fig. 10

17

# Fig. 11

EP 1 355 207 A1

**Europäisches Patentamt**

**EUROPÄISCHER RECHERCHENBERICHT**

Nummer der Anmeldung

EP 02 00 8566

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 4 893 480 A (MATSUI KATSUMASA ET AL) 16. Januar 1990 (1990-01-16) * Spalte 2, Zeile 31 – Spalte 30, Zeile 7; Abbildungen 1-19 * --- | 1,2,4, 17,18,20 | G05B11/32 F25B49/02 F25B41/06 |
| A | WO 00 22487 A (PFEIFFER BERND MARKUS ;BERGOLD STEFAN (DE); PANDIT MADHUKAR (DE);) 20. April 2000 (2000-04-20) * das ganze Dokument * --- | 1-3, 17-19 | |
| A | WO 00 20238 A (FORD WERKE AG) 13. April 2000 (2000-04-13) * das ganze Dokument * --- | 1,2,17, 18 | |
| A | US 5 735 134 A (HE XIANG-DONG ET AL) 7. April 1998 (1998-04-07) * Spalte 3, Zeile 14 – Spalte 16, Zeile 11; Abbildungen 1-19 * --- | 1,2,17, 18 | |
| A | US 5 920 478 A (EKBLAD MARK K ET AL) 6. Juli 1999 (1999-07-06) * Spalte 3, Zeile 32 – Spalte 12, Zeile 7; Abbildungen 1-4 * --- | 1,17 | RECHERCHIERTE SACHGEBIETE (Int.Cl.7) F25B G05B |
| A | US 5 384 698 A (JELINEK JAN) 24. Januar 1995 (1995-01-24) * Spalte 2, Zeile 43 – Spalte 9, Zeile 47; Abbildungen 1-4 * --- | 1,17 | |
| A | EP 0 282 772 A (HITACHI LTD) 21. September 1988 (1988-09-21) --- | | |
| A | DE 200 02 559 U (EHLERS FRANK) 7. Dezember 2000 (2000-12-07) ----- | | |

Der vorliegende Recherchenbericht wurde für alle Patentansprüche erstellt

| Recherchenort | Abschlußdatum der Recherche | Prüfer |
|---|---|---|
| DEN HAAG | 26. September 2002 | Boets, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**　　　EP 02 00 8566

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-09-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 4893480 | A | 16-01-1990 | JP | 2090676 C | 18-09-1996 |
| | | | JP | 8009291 B | 31-01-1996 |
| | | | JP | 63222917 A | 16-09-1988 |
| | | | JP | 2518273 B2 | 24-07-1996 |
| | | | JP | 63279919 A | 17-11-1988 |
| | | | JP | 2086982 C | 02-09-1996 |
| | | | JP | 8006952 B | 29-01-1996 |
| | | | JP | 63282441 A | 18-11-1988 |
| WO 0022487 | A | 20-04-2000 | DE | 19846447 A1 | 13-04-2000 |
| | | | DE | 19919595 A1 | 02-11-2000 |
| | | | AT | 220221 T | 15-07-2002 |
| | | | CN | 1328661 T | 26-12-2001 |
| | | | WO | 0022487 A1 | 20-04-2000 |
| | | | DE | 59901968 D1 | 08-08-2002 |
| | | | EP | 1119799 A1 | 01-08-2001 |
| | | | US | 2002022892 A1 | 21-02-2002 |
| WO 0020238 | A | 13-04-2000 | DE | 19846026 A1 | 13-04-2000 |
| | | | AU | 1373000 A | 26-04-2000 |
| | | | CA | 2312701 A1 | 13-04-2000 |
| | | | WO | 0020238 A2 | 13-04-2000 |
| | | | EP | 0992744 A2 | 12-04-2000 |
| | | | JP | 2000111125 A | 18-04-2000 |
| | | | US | 6216477 B1 | 17-04-2001 |
| US 5735134 | A | 07-04-1998 | JP | 10068554 A | 10-03-1998 |
| US 5920478 | A | 06-07-1999 | KEINE | | |
| US 5384698 | A | 24-01-1995 | AU | 680624 B2 | 07-08-1997 |
| | | | AU | 4842493 A | 29-03-1994 |
| | | | DE | 69309475 D1 | 07-05-1997 |
| | | | DE | 69309475 T2 | 23-10-1997 |
| | | | EP | 0657042 A1 | 14-06-1995 |
| | | | JP | 8500689 T | 23-01-1996 |
| | | | WO | 9406063 A1 | 17-03-1994 |
| EP 0282772 | A | 21-09-1988 | JP | 2735188 B2 | 02-04-1998 |
| | | | JP | 63233258 A | 28-09-1988 |
| | | | DE | 3870942 D1 | 17-06-1992 |
| | | | EP | 0282772 A2 | 21-09-1988 |
| | | | KR | 9312233 B1 | 24-12-1993 |
| DE 20002559 | U | 07-12-2000 | DE | 20002559 U1 | 07-12-2000 |

Für nähere Einzelheiten zu diesem Anhang : siehe Amtsblatt des Europäischen Patentamts, Nr.12/82